# EUROPEAN PATENT APPLICATION

(11) **EP 4 722 531 A1**
(43) Date of publication of application: **08.04.2026**
(21) Application number: 25206420.9
(22) Date of filing: 02.10.2025
(51) Int. Cl.: F03D 13/10, B66C 1/10, F03D 1/06, F03D 80/50

(54) **TOOL FOR HANDLING AND POSITIONING A ROOT COMPONENT AND METHOD FOR HANDLING AND POSITIONING A ROOT COMPONENT**

(30) Priority: 05.10.2024 IN 202441075432
(71) Applicant: Nordex Energy SE & Co. KG, 22419 Hamburg (DE)
(72) Inventor: Jadhav, Jagdish, 560001 Bangalore (IN)
(74) Representative: Völkl Siebenson Patentanwälte - Partnerschaft mbB

(57) **Abstract**

The invention concerns a tool (200) for handling and positioning a root component (300) at a root portion (114) of a wind turbine rotor blade (1) in order to mount the root component (300) at the root portion (114), the tool (200) comprising
- a mounting portion (202) configured such that the root component (300) can be releasably connected to the mounting portion (202),
- means (206) for connecting the tool (200) to a crane in order to move and position the tool (200) with the help of the crane and/or
- means (208) for receiving the fork of a fork lifter in order to move and position the tool (200) with the help of the fork lifter.

The invention further concerns a method for handling and positioning a root component (300) at a root portion (114) of a wind turbine rotor blade (110) in order to mount the root component (300) at the root portion (114).

## Description

The present disclosure relates to a tool for handling and positioning a root component at a root portion of a wind turbine rotor blade. Moreover, the present invention relates to a method for handing and positioning a root component at a root portion of a wind turbine rotor blade.

Wind turbines are widely known and are used to convert wind energy into electrical energy. The wind turbine rotor blades, in the following simply referred to as "rotor blades", are large and heavy objects. They comprise a root portion with which the rotor blade is attached to a rotor hub and a tip portion at an opposite end. The root portion of a rotor blade usually has a generally round cross section.

The root portion of a rotor blade is usually equipped with a root component. The root component can be a root base ring or a root base plate which, for example, serves as a stiffener to increase the structural resistance of the root portion and/or enables maintenance work at the root portion within the wind turbine rotor blade. The root base plate or root base ring (e.g. in combination with a separate base plate) may allow an operator to stand thereon in order to do the maintenance work.

For mounting the root component at the root portion of a rotor blade, the rotor blade is normally positioned substantially horizontally. The root component can be delivered in a substantially horizontal or vertical position. In the first case, handling and positioning the root component at the root portion of the rotor blade may comprise rotating the root component from the horizontal position to a substantially vertical position. Due to the large weight of the root component, positioning and handling the root component in order to mount it at the root portion of a rotor blade is a challenging task.

One object underlying the invention is to provide a concept which contributes to an easier and more flexible handling and positioning of a root component at a root portion of a rotor blade.

This object is achieved, inter alia, by the subject-matter of claim 1 and the method of claim 13. Advantageous embodiments and further developments are subject of the sub-claims.

According to a first aspect, a tool for handling and positioning a root component at the root portion of a wind turbine rotor blade is disclosed in order to mount the root component at the root portion. The tool comprises a mounting portion which is configured such that the root component can be releasably connected to the mounting portion. The tool further comprises means for connecting the tool to a crane in order to move and position the tool with the help of the crane. Additionally, or alternatively, the tool comprises means for receiving the fork of a fork lifter in order to move and position the tool with the help of the fork lifter.

When a root component, such as a base plate or a base ring, is connected to the mounting portion of the tool, the root component together with the tool can either be moved with the help of a crane or with the help of a fork lifter. In this way, handling and positioning the root component is simplified and more flexible. In particular, with the help of the tool, the root component can be precisely positioned into and within in root portion of the wind turbine rotor blade, prior to being finally connected to the rotor blade, e.g. by bonding. The described tool offers several advantages, including reduced process time, increased safety for operators, and a decrease in required manpower. Thus, an overall time needed to complete the mounting of the root component in the rotor blade is reduced. This leads to an improved efficiency and productivity.

The mounting portion may be a mounting frame. The frame structure of the mounting portion may be made of steel. The mounting portion comprises, for example, means for connecting the root component to the mounting portion. The means may comprise clamping means for clamping the root component and/or one or more rachet belts.

The means for connecting the tool to a crane is, for example, one or more eyelets configured to be connected with a chain. The means for receiving the fork of a fork lifter is, for example, insertion channels in which the fork can be inserted.

The means for connecting the tool to the crane and or the means for receiving the fork of a fork lifter are not part of the mounting portion and are not attached to the mounting portion. Particularly, the mounting portion may be pivotable relative to the means for connecting the tool to a crane and/or relative to the means for receiving the fork of a fork lifter.

According to an embodiment, the means for connecting the tool to a crane comprises or consists of four eyelets configured to be connected to chains. Using at least four eyelets can increase the stability of the tool during movement of the tool with the help of the crane.

According to an embodiment, the four eyelets are all arranged in a common plane. This means that a common virtual plane intersects with each of the four eyelets. Having the four eyelets arranged in a common plane simplifies the connection of the tool to the crane and also increases the stability during the movement of the tool with the help of the crane.

According to an embodiment, the four eyelets are located at the four corners of a deltoid. A deltoid is a geometrical form well known to the skilled person. It is a kite quadrilateral. For example, the long and the short diagonals of the deltoid lie in the common plane of the four eyelets. Using such a pattern for the arrangement of the eyelets also helps to increase the stability during the movement of the root component with the help of the crane and, in particular, helps to distribute the loads on the respective chains more equally.

According to an embodiment, the means for receiving the fork of a fork lifter comprises or consists of two elongated insertion channels. The insertion channels may be formed by pipes. The pipes may be made of steel. The insertion channels may each have a rectangular cross section.

According to an embodiment, the insertion channels extend parallel to the common plane of the eyelets. This means that the length axes of the insertion channels, along which the fork is inserted, extend parallel to the common plane of the eyelets. For example, the insertion channels are arranged below the common plane of the eyelets when the tool is moved with help of the crane or moved with the help of the fork lifter.

According to an embodiment, the tool comprises a base portion. The base portion may be a frame element. The frame structure of the base portion may be made of steel.

According to an embodiment, the mounting portion is pivotably connected to the base portion. For example, the mounting portion is connected to the base portion by one or more joints which enable to pivot the mounting portion relative to the base portion.

Having a mounting portion which is pivotable relative to the base portion is advantageous as it allows to precisely position the root component relative to the root portion of the rotor blade when the root component is brought into the proximity of the root portion with the help of a crane or a fork lifter.

According to an embodiment, the mounting portion is pivotable with respect to the base portion about three axes which are all orthogonal to each other. In other words, the mounting portion is pivotable with respect to the base portion in all directions, i.e. three-dimensionally. For this purpose, the mounting portion is, for example, connected to the base portion with the help of three joints wherein each joints enables pivoting about one of the three axes. For example, two of these axes are parallel to the common plane of the eyelets.

By way of example, the pivotable connection about three axes is realized as follows: The mounting portions is connected to the base portion via two intermediate elements, particularly hinge elements. A first intermediate element is pivotably connected to the base portion and is pivotable about one of the three axes relative to the base portion. A second intermediate element is pivotable connected to the first intermediate element and is pivotable about another of the three axes relative to the first intermediate element. The mounting portion is pivotable connected to the second intermediate element and is pivotable about the last one of the three axes relative to the second intermediate element.

According to an embodiment, the base portion comprises the means for connecting the tool to the crane and/or the means for receiving the fork of the fork lifter. The means are, for example, connected to the rest of the base portion in a non-movable manner, i.e. in a fixed manner.

According to an embodiment, the base portion has a first section which mainly extends in a first axis, i.e. parallel to the first axis, and a second section which mainly extends in a second axis, i.e. parallel to the second axis. The first axis and the second axis are orthogonal to each other. The first axis and the second axis are, in particular, parallel to the common plane of the eyelets. The first axis and the second axis are, e.g. two of the three above-mentioned axes about which the mounting portion is pivotable relative to the base portion.

For instance, the length of the first section, measured parallel to the first axis, is larger than the length of the second section, measured parallel to the second axis. For example, the length of the first section is at least 1.2-times or at least 1.5-times larger than the length of the second section.

According to an embodiment, the mounting portion is arranged at the first longitudinal end of the first section. Particularly, the mounting portion is pivotably mounted at the first longitudinal end of the first section. "Longitudinal end" means the end in the main extension direction, i.e. parallel to the first or the second axis of the respective section.

According to an embodiment, the second section is arranged closer to a second longitudinal end of the first section than to the first longitudinal end of the first section. Particularly, the base portion may be cross shaped or arrow shaped when viewed in a top view.

According to an embodiment, the four eyelets are arranged at the longitudinal ends of the first and the second section. Additionally, or alternatively, the openings into the insertion channels are arranged at the side of the base portion opposite to the mounting portion. That is, when inserting the fork into the insertion channels, it is inserted in direction towards the mounting portion.

According to an embodiment, a dead weight is arranged at the side of the base portion opposite to the mounting portion. The dead weight is configured to balance the weight of the mounting portion and the attached root component. For example, the dead weight is arranged at the second longitudinal end of the first section.

According to a second aspect, a method for handling and positioning a root component at a root portion of a wind turbine rotor blade in order to mount the root component at the root portion is disclosed. The method comprises a step of connecting the root component to the mounting portion of a tool as specified herein. In a further step, the tool is connected to the crane via the means for connecting the tool to a crane or the fork of a fork lifter is inserted into the means for receiving the fork of a fork lifter. Then, in a further step, the tool is moved with the blade root component connected thereto with the help of the crane or the fork lifter.

Since the method uses the tool as specified herein, all features disclosed in connection with the tool are likewise disclosed for the method and vice versa.

The root component may be connected to the mounting portion by clamping and/or with the help of ratchet belts. In the method, the tool with the root component connected thereto can either be moved solely with the help of the crane or solely with the help of the fork lifter.

Moving the tool with the help of the crane or with the help of the fork lifter comprises, in particular, bringing the tool from a first location to a second location. The second location is, in particular, a location at a root portion of a rotor blade. The first location may be a location on a vehicle, e.g. on the load area of a truck or a storage rack.

According to an embodiment, the method comprises a further step in which the root component is inserted into the root portion of the wind turbine rotor blade. Thereby, the root component is in a first orientation with respect to the wind turbine rotor blade. For example, the first orientation is a tilted orientation compared to the final orientation of the root component. The final orientation is the orientation of the root component in which it is mounted at the root portion, e.g. orthogonal with respect to a longitudinal direction of the wind turbine rotor blade.

According to an embodiment, the method comprises a further step after the insertion into the root portion in which the root component is moved into a second orientation with respect to the wind turbine rotor blade with the help of the tool. The second orientation is different from the first orientation. For example, the second orientation is the final orientation of the root component.

Moving the root component from the first orientation to the second orientation with the help of the tool comprises or consist of, for example, pivoting the mounting portion relative to the base portion. Particularly, moving the root component from the first orientation into the second orientation may comprise turning and/or tilting and/or lifting the root component around the first axis and/or the second axis and/or a third axis.

Pivoting the mounting portion relative to the base portion may be done manually, e.g. by one operator. At least, less operators compared to moving the root component without the tool are necessary. Alternatively, it may be done with the help of an electric or hydraulic motor. In this case, the tool comprises an electric or hydraulic motor for pivoting the mounting portion relative to the base portion.

After the step of moving the tool with the help of the crane or the fork lifter and, optionally, after the step of moving the root component from the first into the second orientation, the root component may be mounted at the root portion of the rotor blade. For example, it is fixed to the root portion by means of an adhesive.

Further advantages, features and functions, which are explained in connection with the figures, are given in the following exemplary embodiments of the invention. Identical, similar or similarly acting elements are provided with the same reference signs in the figures.

In the figures:
Figure 1 shows a schematic view of a wind turbine,
Figure 2 shows a perspective view of an exemplary embodiment of the tool with a root component connected thereto,
Figure 3 shows a perspective view of the tool without the root component,
Figure 4 shows a side view of the tool,
Figure 5 shows a front view of the tool,
Figure 6 shows a detailed view of the connection between the mounting portion and the base portion of the tool,
Figure 7 shows the tool with the root component connected thereto in a top view with three different orientations of the root component relative to the base portion,
Figures 8 to 10 show the mounting portion of the tool in different views,
Figure 11 shows a perspective view of the root component connected to the mounting portion,
Figure 12 shows a flow chart of an exemplary embodiment of the method.

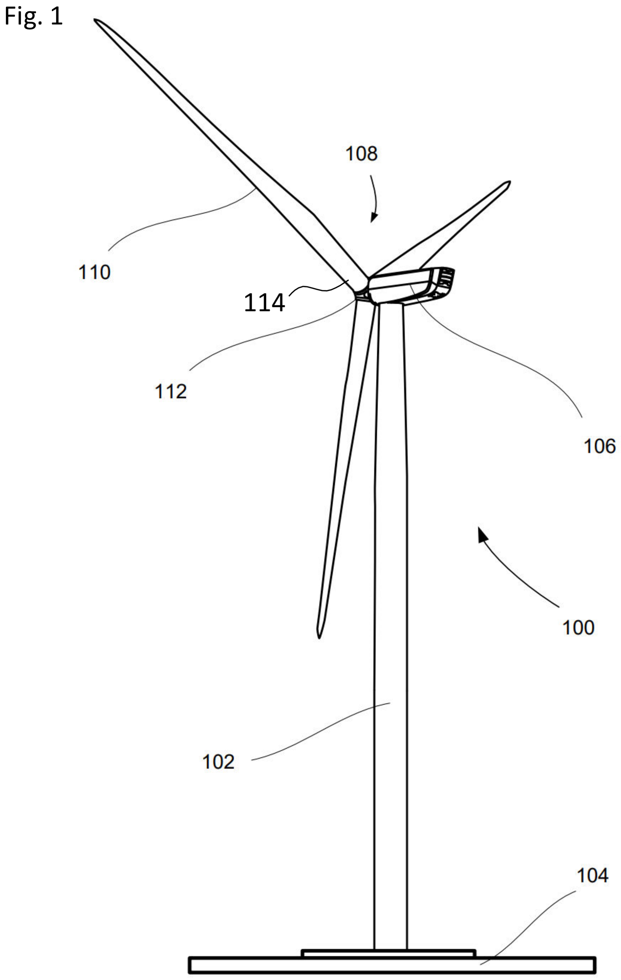

Figure 1 shows a schematic view of a wind turbine 100, which comprises a tower 102. The tower 102 is fixed to the ground by means of a foundation 104. At one end of the tower 102 opposite to the ground a nacelle 106 is rotatably mounted. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow. This rotational movement is transmitted to the generator via the rotor shaft and, if necessary, a gearbox. The generator converts the mechanical energy of the rotor 108 into electrical energy.

Each rotor blade 110 comprises a root portion 114 which is the portion closest to the rotor hub 112. The root portion 114 comprises a root component (not shown in figure 1) which may be used for stiffening the root portion 114 and/or as a platform for an operator to stand on in order to perform maintenance or service work.

In the following, a tool is described which helps or supports the installation of such root component within the root portion 114 of the wind turbine rotor blade 110.

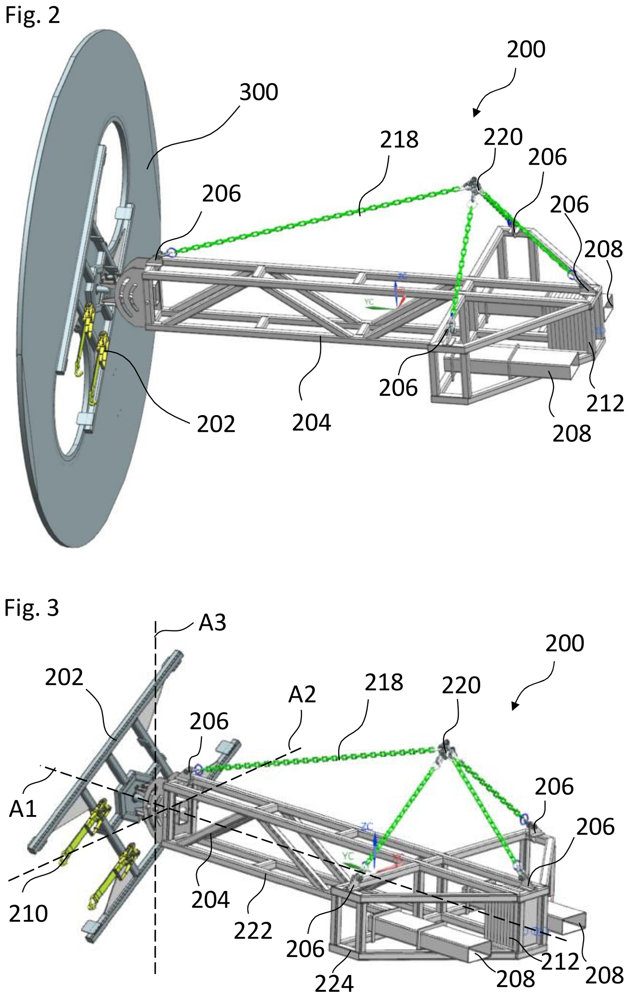

Figure 2 shows an exemplary embodiment of the tool 200 with a root component 300 connected thereto in a perspective view. Figure 3 shows the same tool 200 without the root component 300 and in a perspective view.

The root component 300, which is connected to a mounting portion 202 of the tool, is in the form of a base plate or base disc. It is configured to be mounted at or in the root portion of the rotor blade 110. In the shown example, the root component 300 comprises two holes, i.e. manholes, through which an operator can later on enter into the rotor blade 110. Of course, the root component 300 can be formed differently, e.g. with more, less or even no manholes.

The tool 200 comprises a base portion 204 and the mounting portion 202. The mounting portion 202 is pivotally connected to the base portion 204. The mounting portion 202 and the base portion 204 are both frame elements, i.e. they comprise a rigid, stable frame structure. For example, the frame structures are made of metal like steel. The mounting portion 202 is a clamping frame configured to clamp and hold the root component 300. The root component 300 is secured to the mounting portion 202 with the help of ratchet belts 210.

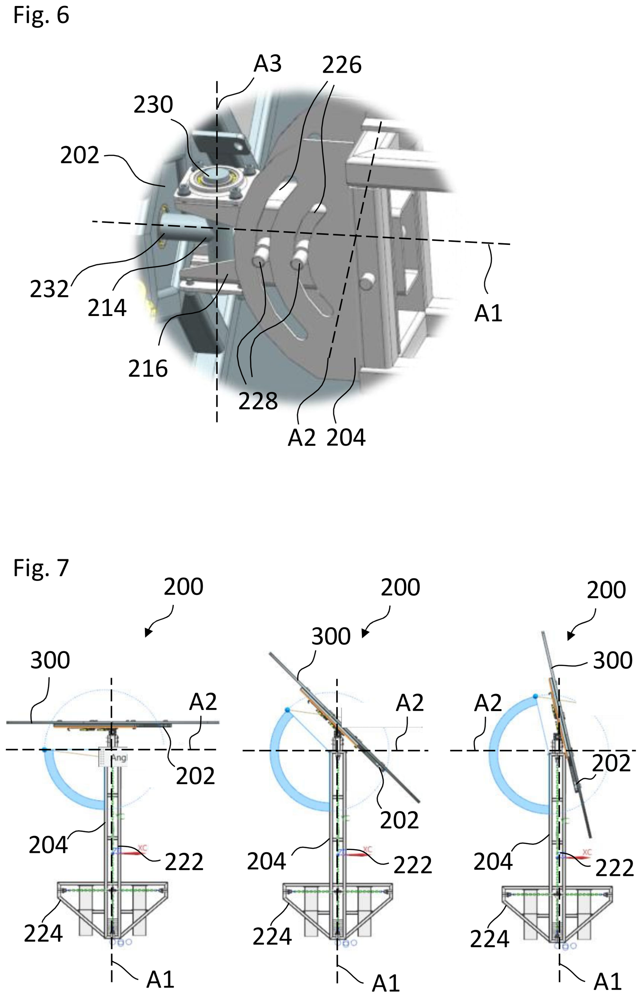

The pivotable connection between the mounting portion 202 and the base portion 204 is such that the mounting portion 202 is pivotal with respect to the base portion about three orthogonal axes A1, A2 and A3. The realization of this three-dimensional (3D) pivotable connection is shown in figure 6. The base portion 204 comprises four slots 226 (two on one side of the axis A1 and two on the other side of the axis A1). The slots 226 are formed as circle segments or ring segments. A first hinge element 216 comprises four pins 228 which engage into the slots 226. With this engagement, the first hinge element 216 is pivotable with respect to the base portion 204 about axis A2. Depending on the length of the slots 226, a maximum angle for pivoting about axis A2 is set. Instead of four slots 226 and the corresponding four pins 228, also a different number of slots 226 and pins 228 is possible. It is also possible to have only one pin (i.e. a bolt or axis), which is pivotably supported on the base portion 204. There might be one or more abutment elements for limiting the pivotable movement and thus setting a respective maximum pivot angle.

The first hinge element 216 comprises a feed through or through hole for a shaft. A first shaft 230 is inserted into the feed through. The first shaft 230 extends parallel to the axis A3 and is arranged rotatably with respect to the first hinge element 216 about the axis A3 inside the feed through. The first shaft 230 is integral part of a further (second) hinge element 214. The further hinge element 214 comprises, besides the first shaft 230, a second shaft 232, which extends in a direction parallel to the axis A1. Thus, the two shafts 230, 232 extend perpendicularly to each other. The further hinge element 214 is T-shaped.

The second shaft 232 extending parallel to the first axis A1 is at one end fixedly connected with the shaft 230 and at the other end the mounting portion 202 is mounted rotatably about the axis A1. Thus, the mounting portion 202 is rotatable relative to the first hinge element 216 about the axis A1.

With the connection of the mounting portion 202 to the base portion 204 via the two intermediate hinge elements 214, 216, the mounting portion 202 is, in total, pivotable with respect to the base portion 204 about the three orthogonal axes A1, A2 and A3. Accordingly, the mounting portion 202 and, if applicable, the root component 300 connected thereto, can be freely oriented with respect to the base portion 204.

A movement of the mounting portion 202 with respect to the base portion 204 is, for example, done manually. Alternatively, an electric or hydraulic motor may be used to move the mounting portion 202 relative to the base portion 204.

Coming back to figures 2 and 3. The base portion 204 comprises a first section 222 and a second section 224. The first section 222 is elongated and extends mainly along the first axis A1 which runs through the first section 222. The second section 224 mainly extents along the second axis A2 which runs through the second section 224. The second section 224 is located further away from the longitudinal end of the first section 222, to which the mounting portion 202 is connected, than to the opposite longitudinal end. Accordingly, the base portion 204 is substantially cross-shaped or arrow shaped. A dead weight 212 is arranged at the longitudinal end of the first section 222 opposite to the longitudinal end at which the mounting portion 202 is located.

The base portion 204 of the tool 200 comprises means 206 for connecting the tool 200 to a crane in order to handle and position the tool 200 with the help of the crane. The means 206 consists of four eyelets 206 which are connected to four chains 218. The four chains 218 merge in a crane hook point 220 provided with an eyelet. The eyelet at the crane hook point 220 can be connected to a hook of a crane.

The four eyelets 206 are arranged at the four longitudinal ends of the first section 222 and the second section 224 of the base portion 204. Particularly, the eyelets 206 are located at the four corners of a deltoid, also known as kite quadrilateral. The four eyelets 206 are arranged in a common plane, which is parallel to a plane spanned by the axis A1 and A2.

The base portion 204 of the tool 200 further comprises means 208 for receiving the fork of a fork lifter in order to handle and position the tool 200 with the help of the fork lifter. The means 208 consists of two insertion channels 208. The insertion channels 208 extend in directions parallel to the first axis A1 and are located below the common plane of the four eyelets 206. When the fork of a fork lifter is inserted into the insertion channels 208, the fork is moved in direction parallel to the first axis A1 and towards the mounting portion 202.

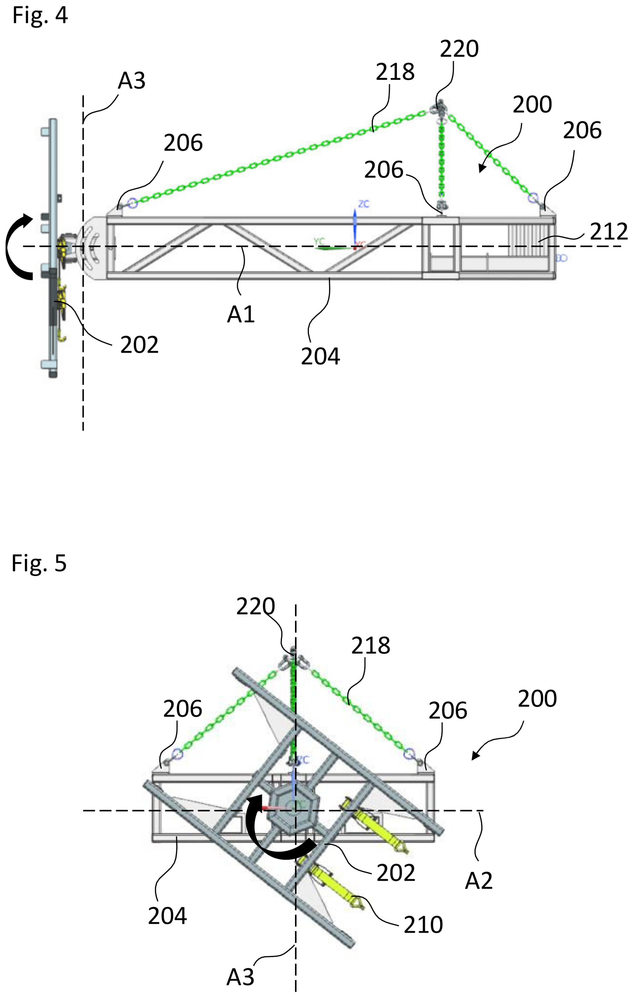

Figure 4 shows the tool of figures 2 and 3 in a side view with a viewing direction parallel to the axis A2. The arrow indicates the rotatability of the mounting portion 202 about the axis A2.

Figure 5 shows the tool 200 of the previous figures in a front view with a viewing direction parallel to the axis A1. The arrow indicates the rotatability of the mounting portion 202 about the axis A1.

Figure 7 shows top views of the tool 200 of the previous figures with a viewing direction parallel to the third axis A3. Here, the root component 300 is again connected to the mounting portion 202. The mounting portion 202 and the root component 300 are rotatable about the axis A3. Three different orientations of the mounting portion 202 and the root component 300 with respect to the base portion 204 are indicated in figure 7.

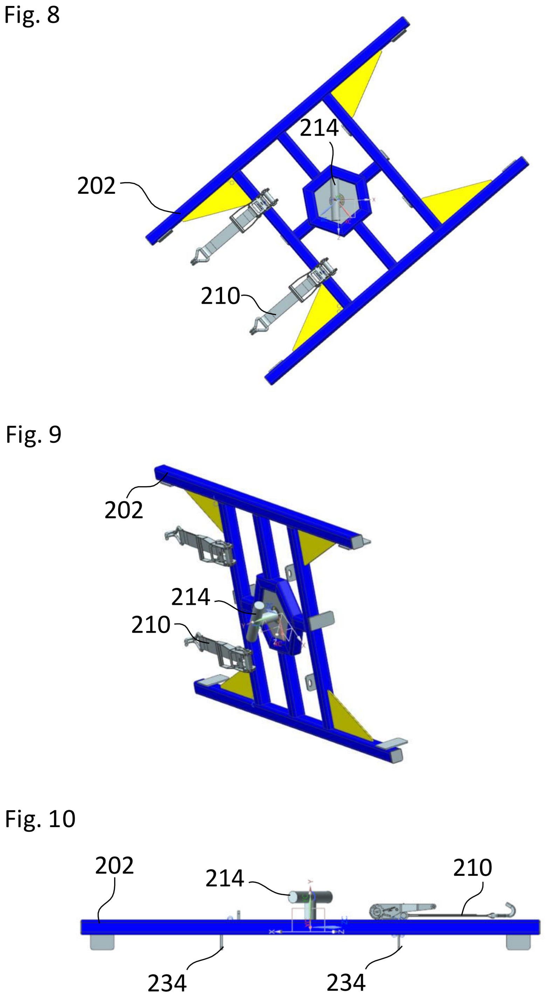

Figures 8 to 10 show the mounting portion 202 with the T-shaped hinge element 214 connected thereto in three different views. As can be seen, the mounting portion 202 is a clamping frame and comprises two rachet belts 210. Particularly, the mounting portion comprises several reference plates 234. The reference plates 234 are configured to support the root component 300.

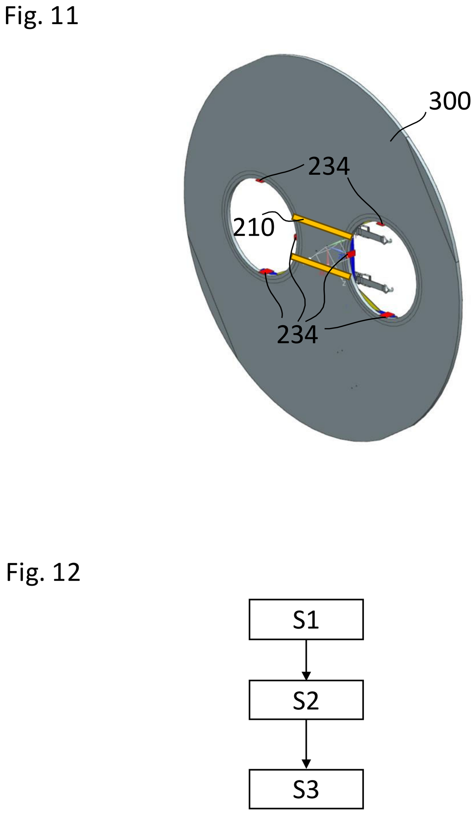

Figure 11 shows the root component 300 connected to the mounting portion 202 with the help of the ratchet belts 210. As can be seen, six reference plates 234 are used to support the root component 300. The reference plates 234 extend into the holes of the root component 300.

Figure 12 shows a flow chart of an exemplary embodiment of the method for handling and positioning a root component 300 at the root portion 214 of the wind turbine rotor blade 110 in order to mount the root component 330 at the root portion 114.

In a first step S1, the root component is connected to the mounting portion of a tool, e.g. of the tool 200 as described in the previous figures.

In a next step S2, the tool 200 is connected to a crane via the means 206. For example, chains are connected to the means 206 and the chains are then connected to a hook of the crane.

Then, in a further step S3, the tool 200 and the root component 300 connected thereto is moved with the help of the crane. For example, the tool 200 and the root component 300 are moved from a storage rack to the root portion of a rotor blade.

Instead of using the crane, in step 2, a fork lifter could be used for moving the tool 200 and the root component 300. In this case, the fork of the fork lifter would be inserted into the means 208. Also in this case, the tool 200 and the root component 300 could, for example, be moved from a storage rack to the root portion of a rotor blade.

For inserting the root component 300 into the root portion of a wind turbine rotor blade 110, the root component 300 may be brought into a first orientation with respect to the rotor blade 110. The tool 200 could then be moved in a direction parallel to the first axis A1 into the root portion 114. The first orientation could be the orientation as shown on the right side of figure 7. After having been inserted into the root portion 114, the root component may be moved into a second orientation with respect to the rotor blade with the help of the tool 200. For this purpose, the mounting portion 202 may be pivoted relative to the base portion 204 and thus, relative to the rotor blade. For example, the second orientation is the orientation as shown on the left side of figure 7. Moving the root component into the first orientation and/or the second orientation may be done manually or with the help of a motor.

### Reference signs

- 100: wind turbine
- 102: tower
- 104: foundation
- 106: nacelle
- 108: rotor
- 110: wind turbine rotor blade
- 112: rotor hub
- 114: root portion

- 200: tool
- 202: mounting portion
- 204: base portion
- 206: means for connecting the tool to a crane / eyelet
- 208: means for receiving the fork of a forklift / insertion channels
- 210: rachet belt
- 212: dead weight
- 214: second hinge element
- 216: first hinge element
- 218: chain
- 220: crane hook point
- 222: first section
- 224: second section
- 226: slot
- 228: pin
- 230: first shaft
- 232: second shaft
- 234: reference plate

- 300: root component
- A1: first axis / first direction
- A2: second axis / second direction
- A3: third axis / third direction

## Claims

1. A tool (200) for handling and positioning a root component (300) at a root portion (114) of a wind turbine rotor blade (1) in order to mount the root component (300) at the root portion (114), the tool (200) comprising
- a mounting portion (202) configured such that the root component (300) can be releasably connected to the mounting portion (202),
- means (206) for connecting the tool (200) to a crane in order to move and position the tool (200) with the help of the crane, and/or
- means (208) for receiving the fork of a fork lifter in order to move and position the tool (200) with the help of the fork lifter.

2. Tool (200) according to claim 1, wherein
- the means (206) for connecting the tool (200) to a crane comprises or consists of four eyelets configured to be connected to chains (218).

3. Tool (200) according claim 2, wherein
- the four eyelets (206) are all arranged in a common plane.

4. Tool (200) according to claim 2 or 3, wherein
- the four eyelets (206) are located at the four corners of a deltoid.

5. Tool (200) according to any one of the preceding claims, wherein
- the means (208) for receiving the fork of a fork lifter comprises or consists of two elongated insertion channels.

6. Tool (200) according to claim 5 in its dependency on claim 3 or 4, wherein
- the insertion channels (208) extend parallel to the common plane of the eyelets (206).

7. Tool (200) according to any one of the preceding claims, further comprising
- a base portion (204), wherein
- the mounting portion (202) is pivotably connected to the base portion (204).

8. Tool (200) according to claim 7, wherein
- the mounting portion (202) is pivotable with respect to the base portion (204) about three axes (A1, A2, A3) which are all orthogonal to each other.

9. Tool (200) according to claim 7 or 8, wherein
- the base portion (204) comprises the means (206) for connecting the tool (200) to the crane and/or the means (208) for receiving the fork of the fork lifter.

10. Tool (200) according to any of claims 7 to 9, wherein
- the base portion (204) has a first section (222) which mainly extends in a first axis (A1),
- the base portion (204) has a second section (224) which mainly extends in a second axis (A2),
- the first axis (A1) and the second axis (A2) are orthogonal to each other,
- the mounting portion (202) is arranged at a first longitudinal end of the first section (222),
- the second section (224) is arranged closer to a second longitudinal end of the first section (222) than to the first longitudinal end of the first section (222).

11. Tool (200) according to claim 10 in its dependency on claims 4 and 6, wherein
- the four eyelets (206) are arranged at the longitudinal ends of the first (222) and the second section (224), and/or
- the openings into the insertion channels (208) are arranged at the side of the base portion (204) opposite to the mounting portion (202).

12. Tool (200) according to claim 10 or 11, wherein a dead weight (212) is arranged at the side of the base portion (204) opposite to the mounting portion (202).

13. Method for handling and positioning a root component (300) at a root portion (114) of a wind turbine rotor blade (110) in order to mount the root component (300) at the root portion (114), the method comprising
- connecting the root component (300) to the mounting portion (202) of a tool (200) according to any one of claims 1 to 12,
- connecting the tool (200) to the crane via the means (206) for connecting the tool (200) to a crane, or
- inserting the fork of a fork lifter into the means (208) for receiving the fork of a fork lifter,
- moving the tool (200) with the blade root component (300) connected thereto with the help of the crane or the fork lifter.

14. Method according to claim 13, comprising a further step,
- inserting the root component (300) into the root portion (114) of the wind turbine rotor blade (110) in a first orientation with respect to the wind turbine rotor blade (110).

15. Method according to claim 14, comprising a further step,
- after insertion, moving the root component (300) into a second orientation with respect to the wind turbine rotor blade (110) with the help of the tool (200).
